# EUROPÄISCHE PATENTSCHRIFT

(11) **EP 1 072 081 B1**
(45) Veröffentlichungstag und Bekanntmachung des Hinweises auf die Patenterteilung: **01.02.2006**
(21) Anmeldenummer: 99917990.6
(22) Anmeldetag: 16.04.1999
(51) Int. Cl.: H02J 13/00, H02J 3/14

(54) **VERFAHREN ZUM REGELN DER GESAMTLEISTUNG VON ENERGIETECHNISCHEN ANLAGEN, INSBESONDERE EINER GRUPPE VON ELEKTRISCHEN VERBRAUCHERN**
METHOD FOR ADJUSTING TOTAL POWER OF AN ELECTRIC INSTALLATION, ESPECIALLY OF A GROUP OF ELECTRIC CONSUMER
PROCEDE DE REGLAGE DE LA PUISSANCE TOTALE D'UNE INSTALLATION ELECTRIQUES, PARTICULIEREMENT D'UN GROUPE DE CONSOMMATEURS D'ENERGIE

(30) Priorität: 17.04.1998 DE 19817191
(43) Veröffentlichungstag der Anmeldung: 31.01.2001
(73) Patentinhaber: Frank, Thomas, 21224 Rosengarten (DE)
(72) Erfinder: Frank, Thomas, 21224 Rosengarten (DE)
(74) Vertreter: Siemons, Norbert
(86) Internationale Anmeldenummer: PCT/EP1999/002590
(87) Internationale Veröffentlichungsnummer: WO 1999/054984

(56) Entgegenhaltungen:
- EP-A1- 0 445 449
- EP-A1- 0 561 255
- EP-A2- 0 198 222
- EP-A2- 0 372 961
- DE-C1- 19 530 826

## Beschreibung

Die Erfindung bezieht sich auf ein Verfahren zum Regeln der Gesamtleistung von energietechnischen Anlagen, insbesondere einer Gruppe von elektrischen Verbrauchern.

Es sind bereits Energie-Management-Systeme bekanntgeworden, deren Hauptziel die Reduzierung von Leistungsspitzen ist. Diese Leistungsspitzen führen bei Unternehmen mit hohem Energieverbrauch zu erheblichen Kosten. Ab einer Anschlußleistung von in der Regel 25 kW zahlen nämlich die Kunden der Energieversorgungsunternehmen (EVU) einen Arbeitspreis und einen Leistungspreis. Der Arbeitspreis wird für jede verbrauchte kWh in Rechnung gestellt. Der Leistungspreis, der in Deutschland zwischen DM 50,00 und DM 400,00 pro kW und Jahr beträgt, wird hingegen für die vom Abnehmer erreichte Spitze der Leistungsaufnahme (Leistungsspitze) in Rechnung gestellt.

Die Vorteile einer Leistungsspitzensenkung werden durch folgendes Beispiel verdeutlicht: In einem Betrieb wird ein Lüfter mit einer Anschlußleistung von 2 kW bei Arbeitsbeginn ein- und bei Arbeitsende wieder ausgeschaltet. Zur Mittagszeit entsteht, bedingt durch die Betriebskantine, eine Leistungsspitze im Energieverbrauch. Das unnötige Betreiben des Lüfters in der Mittagszeit schlägt bei einem Leistungspreis von DM 350,00/kW und Jahr mit DM 700,00 p.a. zu Buche. Ein Energie-Management-System würde in diesem Fall den Lüfter während der Leistungsspitze abschalten und würde somit eine Einsparung von DM 700,00 p.a. erzielen.

Die Leistungsspitze wird ermittelt, indem die Arbeit in einem Zeitintervall durch das Zeitintervall geteilt wird. Das Zeitintervall wird beispielsweise durch den ¼-Stunden-Impuls der EVU definiert, den die Zähler über eine Rundsteueranlage empfangen, worauf sie den Arbeitszähler für die Ermittlung einer Leistungsspitze zurücksetzen. Auch kann es eine sinnvolle Zielsetzung sein, den Absolutwert der Gesamtleistung einer Gruppe elektrischer Verbraucher zu regeln. Dies ist beispielsweise bei Inselbetrieb einer Gruppe von Verbrauchern der Fall, die mittels Notstromaggregat versorgt werden sollen, welches weniger in der Lage ist, Leistungsspitzen verschiedener Verbraucher abzufangen.

Ähnlich verhält es sich bei anderen Energieträgern wie Gas, Fernwärme, Wasser, wo es ebenfalls einen am Gesamtverbrauch und einen an einer Verbraucherspitze orientierten Preis geben kann oder es wünschenswert sein kann, einen Absolutwert einzuhalten. Gas, Fernwärme und Wasser verbrauchende Anlagen sind ebenfalls energietechnische Anlagen im Sinne dieser Patentanmeldung.

Aus der EP 053 383 B2 ist ein Verfahren zur rechnergesteuerten Überwachung des auf eine einstellbare maximale Grenzleistung beschränkten Gesamtstromverbrauchs einer Gruppe von an ein Stromnetz angeschlossenen einzelnen Stromverbrauchern, von denen wenigstens einige vorübergehend abschaltbar oder auf verringerte Leistungsentnahme umsteuerbar sind, bekannt. Zur Begrenzung der Gesamtleistungsaufnahme der Stromverbraucher auf einen Wert unterhalb der Grenzleistung wird die jeweils vorhandene Leistungsaufnahme der einzelnen Stromverbraucher periodisch gemessen und die Summe der gemessenen Leistungsaufnahmen mit der Grenzleistung verglichen. Ein den Grenzwert übersteigender oder wesentlich unterschreitender Gesamtstromverbrauch wird durch Ab- oder Zuschaltung oder leistungsverringemde bzw. leistungserhöhende Umsteuerung eines oder mehrerer ausgewählter Stromverbraucher möglichst nahe an die Grenzleistung herangeführt. Dabei sind die Stromverbraucher jeweils über einen Ein/Ausschalter an das Stromnetz angeschlossen.

Durch das Verfahren soll sichergestellt sein, daß bei Vorhandensein von Stromverbrauchern, welche über äußere Schalteinrichtungen an das Stromnetz angeschlossen sind, zusätzlich aber auch interne Steuer- oder Regelkreise aufweisen, die intern zyklisch eine zeitlich begrenzte Stromabschaltung vornehmen, nach jedem Abfragezyklus zur Ermittlung des momentanen Gesamtstromverbrauches durch Nichteinschalten von einschaltbereiten Stromverbrauchern bzw. durch Abschaltung bestimmter eingeschalteter Stromverbraucher eine sonst drohende Überschreitung der maximalen Grenzleistung sicher vermieden wird. Außerdem soll sichergestellt sein, daß bei sich anzeigender wesentlicher Unterschreitung der maximalen Grenzleistung durch Wiedereinschalten vorher abgeschalteter Stromverbraucher oder auch neu in den Stromkreis einzuschaltender Stromverbraucher der Gesamtstromverbrauch möglichst nahe unterhalb der Grenzleistung gehalten werden kann.

Hierfür sind zur Übermittlung der jeweiligen Schalt- und Betriebszustände der Stromverbraucher ihre Ein/Ausschalter jeweils über eine erste Meldeleitung und ihre internen Regel- oder Steuerkreise zur zyklischen Regelung oder zur Steuerung der Leistungsaufnahme der Stromkreisverbraucher jeweils über eine zweite Meldeleitung an den Rechner angeschlossen. In jeder Meßperiode werden die Stromverbraucher nach ihren momentanen Schalt-und Betriebszuständen und nach ihren momentanen Leistungsaufnahmen abgefragt. Ferner wird für jeden internen Stromverbraucher eine momentan gültige Zu- bzw. Abschalt-Prioritätsziffer ermittelt. Schließlich wird eine momentan zu erwartende Überschreitung der Grenzleistung durch eine prioritätsorientierte Unterbrechung oder Umsteuerung wenigstens eines unterbrechbaren bzw. umsteuerbaren Stromverbrauchers für eine festgelegte Zeitspanne vermieden und die Leistungsdifferenz zwischen der Grenzleistung und einer momentan zu erwartenden wesentlichen Unterschreitung der Grenzleistung durch prioritätsorientiertes Zuschalten an wenigstens einen unterbrochenen oder umsteuerbaren Stromverbraucher vergeben.

Dieses Verfahren ist auf einen zentralen Rechner ausgerichtet. Deshalb müssen an den Verbrauchern die ersten und zweiten Meldeleitungen zur Verfügung gestellt und zu dem zentralen Rechner geführt werden. Des weiteren sind vom Zentralrechner zu den Verbrauchern Steuerleitungen zu führen, um deren Betrieb zu unterbrechen, aufzunehmen oder umzusteuern. Somit besteht ein erheblicher Verkabelungsaufwand, der Anlaß zu Störungen geben kann. Auch ist dieses Verfahren durch die Abhängigkeit vom Zentralrechner störanfällig. Zudem muß der Zentralrechner bei einer Vielzahl von Stromverbrauchern eine erhebliche Rechenkapazität haben, die noch erweitert werden muß, wenn das System durch weitere Verbraucher ergänzt werden soll.

Aus der EP 0 561 255 A1 ist ein Verfahren zum Regeln der Gesamtleistung energietechnischer Anlagen bekannt, bei dem eine Grundstation die momentane Gesamtleistung der energietechnischen Anlage ermittelt, die Grundstation in einer Tabelle für jeden Verbraucher eine Priorität speichert und jede Unterstation eine Steuerung aufweist, die mindestens einem Verbraucher zugeordnet ist.

Davon ausgehend liegt der Erfindung die Aufgabe zugrunde, ein Verfahren bzw. eine Vorrichtung zum Regeln der Gesamtleistung energietechnischer Anlagen, insbesondere einer Gruppe von elektrischen Verbrauchern zu schaffen, das bzw. die unter verringertem Aufwand installierbar, weniger störanfällig, leistungsfähiger und flexibler ist.

Die Aufgabe wird durch ein Verfahren mit den Merkmalen des Anspruches 1 und eine Vorrichtung mit den Merkmalen des Anspruches 18 gelöst. Vorteilhafte Ausgestaltungen sind in den Unteransprüchen angegeben.

Das erfindungsgemäße Verfahren zum Regeln der Gesamtleistung von energietechnischen Anlagen, insbesondere einer Gruppe von elektrischen Verbrauchern, führt folgende Verfahrensschritte aus.

1.1 Eine Grundstation ermittelt eine momentane Gesamtleistung der energietechnischen Anlage. Dafür kann sie sich eines Verbrauchszählers bedienen. Falls die energietechnische Anlage eine Gruppe elektrischer Verbraucher ist, kann der Verbrauchszähler ein Elektrizitätszähler sein.

Wie bereits oben ausgeführt, wird bei Einsatz eines Elektrizitätszählers die Leistungsspitze ermittelt, indem die elektrische Arbeit in einem Zeitintervall (z.B. eine ¼ Stunde) kumuliert und durch das Zeitintervall geteilt wird. Vorzugsweise wird dann die momentane Gesamtleistung als Trendleistung errechnet. Dieses kann geschehen, indem die elektrische Arbeit im abgelaufenen Teil des Zeitintervalls kumuliert wird. Die Trendleistung ergibt sich dann aus der aktuellen Leistung multipliziert mit der Restzeit des Zeitintervalles. Dabei errechnet sich die aktuelle Leistung aus der kumulierten elektrischen Arbeit im abgelaufenen Teil des Zeitintervalles geteilt durch die Dauer des abgelaufenen Teils des Zeitintervalles. Eine solche Trendleistung ist quasi ein Vorhersagewert für die im gesamten Zeitintervall erreichte Leistungsspitze. Sie ist deshalb eine besonders geeignete Grundlage für eine Regelung der Gesamtleistung energietechnischer Anlagen, die auf die Senkung des Leistungspreises abzielt.

Entsprechend kann eine momentane Gesamtleistung als Trendleistung auch bei anderen Verbrauchszählem ermittelt werden, z.B. für Gas, Fernwärme, Wasser.

Es versteht sich, daß die momentane Gesamtleistung wiederholt ermittelt wird, wobei die Häufigkeit der Ermittlung in Abhängigkeit von der gewünschten Empfindlichkeit der Regelung gewählt werden kann.

1.2 Die Grundstation speichert in einer Tabelle für jeden Verbraucher eine aktuelle Priorität und das erwartete Schaltverhalten der Verbraucher. In einem einfachen Fall wird das erwartete Schaltverhalten allein durch Daten über die Schaltleistungen bestimmt, die von den Verbrauchern auf absehbare Zeit (z. B. ein oder mehrere Zeitintervalle) als Abschaltleistung zur Verfügung gestellt oder als Zuschaltleistung benötigt werden. Vorzugsweise wird jedoch das erwartete Schaltverhalten der Verbraucher durch weitere Daten charakterisiert. Außer den Daten über die Schaltleistungen können dies insbesondere Daten über die Dauer, während der diese Schaltleistungen zur Verfügung stehen oder benötigt werden, und über den Zeitpunkt, zu dem diese Schaltleistungen zu schalten sind, sein. Zudem kann das erwartete Schaltverhalten durch Daten über zeitliche Veränderungen der Schaltleistungen charakterisiert werden. Grundsätzlich kann also die "Tabelle" für jeden Verbraucher sehr umfangreiche Daten enthalten.

Das erwartete Schaltverhalten hängt stark vom Typ und von der Betriebsart des jeweiligen Verbrauchers ab. Bei einem Verbraucher, der mit konstanter abzuschaltender oder zuzuschaltender Schaltleistung arbeitet (z.B. ein Lüfter), wird die volle Anschlußleistung abgespeichert.

In anderen Fällen kann eine bewertete Schaltleistung abgespeichert werden. Dies kann eine Schaltleistung sein, die im Mittel über einen Zeitintervall (z.B. ¼ Stunde bei einem Elektrizitätszähler) zum Schalten zur Verfügung steht. Dies kann insbesondere bei einem getakteten Verbraucher (z.B. einem Heizkessel) der Fall sein. Wird dieser so getaktet, daß er über 20 % der Zeit ausgeschaltet und über 80 % der Zeit mit der vollen Anschlußleistung betrieben wird, ist seine bewertete Schaltleistung 20 % der Anschlußleistung. Wenn ein solcher Verbraucher jedoch erstmalig eingeschaltet wird, kann bis zum Erreichen des gewünschten Betriebszustandes die volle Anschlußleistung die Schaltleistung sein.

Das erwartete Schaltverhalten von Verbrauchern mit verhältnismäßig komplexem zeitlichem Verlauf der Leistungsaufnahme (z.B. bei einer Geschirrspülmaschine) kann vielfach ebenfalls in ausreichendem Maße durch bewertete Schaltleistungen, gegebenenfalls mit unterschiedlicher Höhe in verschiedenen Zeitabschnitten, erfaßt werden. Grundsätzlich ist es auch möglich, das erwartete, komplexe Schaltverhalten von Verbrauchern vollständig in einer Tabelle zu speichern. Vielfach ist es jedoch nicht erforderlich, das erwartete Schaltverhalten dermaßen detailliert zu berücksichtigen.

Außerdem sind zwei Sonderfälle für die Schaltleistung zu berücksichtigen: Ist ein Verbraucher nicht eingeschaltet oder darf er gerade nicht abgeschaltet werden, so steht er für die Abschaltung nicht zur Verfügung. Ist hingegen ein Verbraucher eingeschaltet oder darf er gerade nicht cingeschaltet werden, so steht er für die Einschaltung nicht zur Verfügung. In beiden Fällen ist seine Schaltleistung gleich Null.

In einem einfachen Fall können feste Vorgabewerte für das erwartete Schaltverhalten in der Grundstation gespeichert sein. Vorzugsweise werden jedoch aktuelle Werte des erwarteten Schaltverhaltens zur Verfügung gestellt, worauf unten noch eingegangen wird.

Die aktuelle Priorität und das erwartete Schaltverhalten können in der Tabelle nach einem vorgegebenen Ordnungsprinzip und/oder mit einer Identifikation für jeden Verbraucher gespeichert sein, so daß es möglich ist, neue Werte der aktuellen Priorität oder des aktuell erwarteten Schaltverhaltens an der richtigen Stelle einzuschreiben und damit die überholten Werte zu tilgen.

1.3 Die Grundstation ermittelt aufgrund eines Vergleichs der momentanen Gesamtleistung mit mindestens einem vorgegebenen Leistungswert anhand der Tabelle eine Prioritätsstufe, die eine Grenze zwischen Verbrauchern definiert, die in den Lastabwurf zu bringen, im Normalbetrieb zu betreiben oder zum Speichern von Energie zu bringen sind.

Dabei kann der mindestens eine vorgegebene Leistungswert insbesondere eine Leistungsspitze, ein Leistungsintervall oder ein einzuhaltender Absolutwert sein. Bei der Ermittlung der Prioritätsstufe findet das erwartete Schaltverhalten der Verbraucher Berücksichtigung.

Dabei bedeutet "in Lastabwurf bringen": Verbraucher völlig abschalten oder deren Einschalten verhindern und/oder Verbraucher, die auf verschiedenen Energieniveaus betrieben werden, auf ein niedrigeres Energieniveau fahren (z.B. einen Kessel auf eine niedrigere Temperatur, Takten z.B. eines Herdes während kürzerer Zeitabschnitte). In Normalbetrieb betreiben: in den Betrieb eines Verbrauchers nicht eingreifen. Energie speichern: Verbraucher einschalten, um Energie für eine spätere Bedarfssituation zu speichern, oder zu diesem Zweck Verbraucher zeitweilig auf höheren Energieniveaus betreiben (z. B. tiefer kühlen einer Kühlzelle). Der Übergang von Lastabwurf in den Normalbetrieb wird überdies als "Freischalten" bezeichnet. Als "Freischalten" kann auch der Übergang vom Energiespeichern in den Normalbetrieb bezeichnet werden.

1.4 Die Grundstation überträgt über ein Übertragungsmedium die ermittelte Prioritätsstufe. Das Übertragungsmedium kann insbesondere Kabel, Glasfaser und/oder Funk sein. Für die Übertragung kann ein spezielles Kabel, das 230 Volt/Hausnetz oder ein Telefonnetz dienen.

1.5 Die übertragene Prioritätsstufe wird von Unterstationen empfangen, von denen jede einer Steuerung zugeordnet ist, die ihrerseits mindestens einem Verbraucher zugeordnet ist.

1.6 Die Unterstationen bringen aufgrund eines Vergleichs der empfangenen Prioritätsstufe mit ihrer aktuellen Priorität die diesem zugeordneten Verbraucher in den Lastabwurf, bringen diese dazu, im Normalbetrieb zu arbeiten oder Energie zu speichern.

Die Zuordnung des Betriebszustandes eines Verbrauchers zum Ergebnis des Vergleichs kann grundsätzlich nach verschiedenen Definitionen erfolgen. Beispielsweise kann folgendes Schema zugrundeliegen:

Sämtliche Verbraucher, deren Absolutwert der - positiven oder negativen - aktuellen Priorität größer oder gleich dem Wert einer positiven Prioritätsstufe ist, werden in den Normalbetrieb geschaltet bzw. bleiben im Normalbetrieb.

Sämtliche Verbraucher mit positiver aktueller Priorität, die kleiner ist als eine positive Prioritätsstufe, werden in den Lastabwurf geschaltet bzw. bleiben im Lastabwurf.

Schließlich werden sämtliche Verbraucher mit negativer Priorität, deren Absolutwert kleiner als der Absolutwert einer negativen Prioritätsstufe ist, zum Energiespeichern bzw. zum weiteren Speichern von Energie gebracht.

Verdeutlicht wird dies durch nachfolgende Tabelle, die für verschiedene Prioritätsstufen der Grundstation (Kopfzeile) und verschiedene aktuelle Prioritäten der Verbraucher (linke Randspalte) die zu schaltenden Betriebszustände angibt. Dabei ist der Lastabwurf durch LA, der Normalbetrieb durch NB und das Energiespeichern durch ES angegeben.

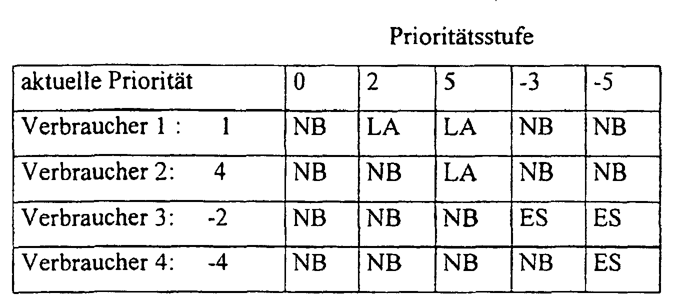

Daraus wird deutlich, daß durch eine aktuelle Priorität mit einem hohen absoluten Wert erreicht werden kann, daß der zugeordnete Verbraucher im Normalbetrieb arbeitet.

1.7 Die aktuelle Priorität wird von den jeweiligen Unterstationen ermittelt. Dies kann insbesondere aufgrund eines Betriebsparameters der von diesen gesteuerten Verbraucher erfolgen. Zusätzlich oder statt dessen kann die aktuelle Priorität von einem Bediener gesteuert werden, beispielsweise durch manuelle Eingabe.

So kann beispielsweise das Erreichen eines unerwünschten Betriebszustandes des Verbrauchers eine zum Lastabwurf führende aktuelle Priorität und ein längerer "Stillstand" eines Verbrauchers vor einem bevorstehenden Einsatz eine zum Energiespeichern führende aktuelle Priorität zur Folge haben. Ein weiteres Beispiel ist der Parallelbetrieb zweier Lüfter mit einem Sensor für die Luftqualität (z. B. CO₂-Sensor). Falls ein Sensor einen ungünstigeren Wert als der andere ermittelt, wird dem zugeordneten Lüfter eine aktuelle Priorität zugeordnet, die dessen Betrieb begünstigt.

Die Daten der aktuellen Priorität werden über ein Übertragungsmedium von den Unterstationen an die Grundstation übertragen. Im Falle der Ermittlung des Verbrauchs über Zeitintervalle wird bevorzugt die Änderung der Priorität an die Grundstation übermittelt, falls sie über mehrere Zeitintervalle Gültigkeit hat.

Vorzugsweise kann zudem das erwartete Schaltverhalten von Unterstationen insbesondere aufgrund der dort vorliegenden Betriebsparameter der zugeordneten Verbraucher und/oder Steuerbefehlen eines Benutzers ermittelt werden. Dann können auch die jeweiligen Daten über das erwartete Schaltverhalten von den Unterstationen an die Grundstation über ein Übernagungsmedium übermittelt und in die dort geführte Tabelle übernommen werden.

Die Daten der aktuellen Priorität bzw. des erwarteten Schaltverhaltens können von den Unterstationen an die Grundstation nach bestimmten Ordnungsprinzipien übermittelt werden (z. B. in einer bestimmten zeitlichen Abfolge oder zu bestimmten Zeitpunkten), um der Grundstation eine korrekte Zuordnung zu der Tabelle zu ermöglichen. Die Grundstation kann die Daten auch gezielt von den Unterstationen abfragen. Für die Zuordnung können die Daten jedoch auch zusammen mit einer Identifikation des Verbrauchers übermittelt werden, für die sie gelten. Dies begünstigt eine Ermittlung der Daten zu beliebigen Zeitpunkten bzw. nur dann, wenn eine Änderung vorliegt.

Das Übertragungsmedium kann entsprechend dem Übertragungsmedium für die Prioritätsstufe gewählt sein bzw. mit diesem zusammenfallen (vgl. 1.4).

1.8 Die Grundstation ändert die Tabelle aufgrund der von den Unterstationen übermittelten Prioritäten. Darüber hinaus kann gegebenenfalls die Tabelle aufgrund der von Unterstationen übertragenen Daten über das erwartete Schaltverhalten geändert werden. Bei der Zuordnung ist eine Identifikation der Verbraucher hilfreich.

Bei dem Verfahren entfallen also auf die Grundstationen und die Unterstationen verschiedene Aufgaben. Die Grundstation, die z.B. einem Elektrizitätszähler als besonderes Gerät zugeordnet oder in diesem integriert sein kann, verarbeitet alle relevanten EVU-Daten und arbeitet die aktuelle Lastsituation auf. Diese Daten werden dann an alle Unterstationen verbreitet. Dazu gehört vor allem die Prioritätsstufe, die die Grenze zwischen den in Lastabwurf zu bringenden, in Normalbetrieb zu betreibenden und den zum Speichern von Energie zu bringenden Verbrauchern definiert. Die Unterstationen, die direkt in die zu schaltenden Verbraucher integriert sein können, diesen aber auch als getrennte Geräte zugeordnet sein können, steuern dann die Verbraucher. In beiden Fällen können die Unterstationen von einer Software, Software-gesteuerter Hardware oder reiner Hardware gebildet sein. Das Ein- oder Ausschalten der Verbraucher wird also nicht zentral gesteuert, sondern dezentral bzw. direkt im Verbraucher. Soweit die Unterstationen in die Verbraucher integriert sind, können die Unterstationen direkt in der Verbrauchersteuerung auf die Erfassung der Betriebsparameter und den Leistungsteil zugreifen.

In das Verfahren ist ein dynamisches Prioritätsmanagement integriert. Damit kann jeder Verbraucher eigenständig seine Priorität in der von der Grundstation geführten Tabelle erhöhen. Dies kann entweder durch einen Parameter aus dem Prozeß, z.B. die Temperatur, oder manuell vom Bediener ausgelöst werden. Wenn eine Unterstation für ein unbedingt benötigtes Gerät der Grundstation eine entsprechende aktuelle Priorität signalisiert, berechnet die Grundstation die Lastsituation und die zur Verfügung stehende Schaltleistung neu und sendet eine neu ermittelte Prioritätsstufe an sämtliche Unterstationen.

Dabei kann die Priorität entweder ein vorkonfigurierter, fester Wert oder eine relative Angabe der Form "höchste Priorität", "erhöhte Priorität", "mittlere Priorität" sein. Werden feste Werte verwendet, so sind die Prioritäten der verschiedenen Verbraucher immer in vorgegebenen Mustern einander zugeordnet. Werden relative Angaben verwendet, können sich die Prioritäten der Verbraucher zueinander beliebig verschieben, weil immer der Verbraucher mit der höchsten Priorität "oben" in der Prioritätenliste eingetragen wird.

Überdies ist es im Rahmen der Erfindung möglich, verschiedene Trendberechnungen für die momentane Gesamtleistung parallel durchzuführen, beispielsweise um einen Kurzzeittrend und um einen Langzeittrend zu ermitteln. Aufgrund der Berechnungsergebnisse kann die Grundstation verschiedene Prioritätsstufen ausgeben, die den Betrieb verschiedener Verbraucher steuern. Grundsätzlich ist es damit möglich, daß der Steuerung jedes Verbrauchers eine eigene Trendberechnung zugeordnet wird. Die Berechnung kann in einer einzigen Grundstation oder parallel arbeitenden Grundstationen erfolgen.

Darüber hinaus wird erfindungsgemäß wie in Anspruch 18 angegeben eine Vorrichtung zum Regeln der Gesamtleistung von energietechnischen Anlagen vorgeschlagen.

Die Erfindung wird nachfolgend anhand der anliegenden Zeichnungen von Ausführungsbeispielen näher erläutert. In den Zeichnungen zeigen:
- Fig. 1: System zur Durchführung des Verfahrens in grobschematischem Blockbild;
- Fig. 2: Beispiel für das Arbeiten mit vorkonfigurierten Prioritäten;
- Fig. 3: Beispiel für das Arbeiten mit relativen Prioritätsangaben;
- Fig. 4: Beispiel für das Arbeiten mit vorkonfigurierten, teilweise übereinstimmenden Prioritäten.

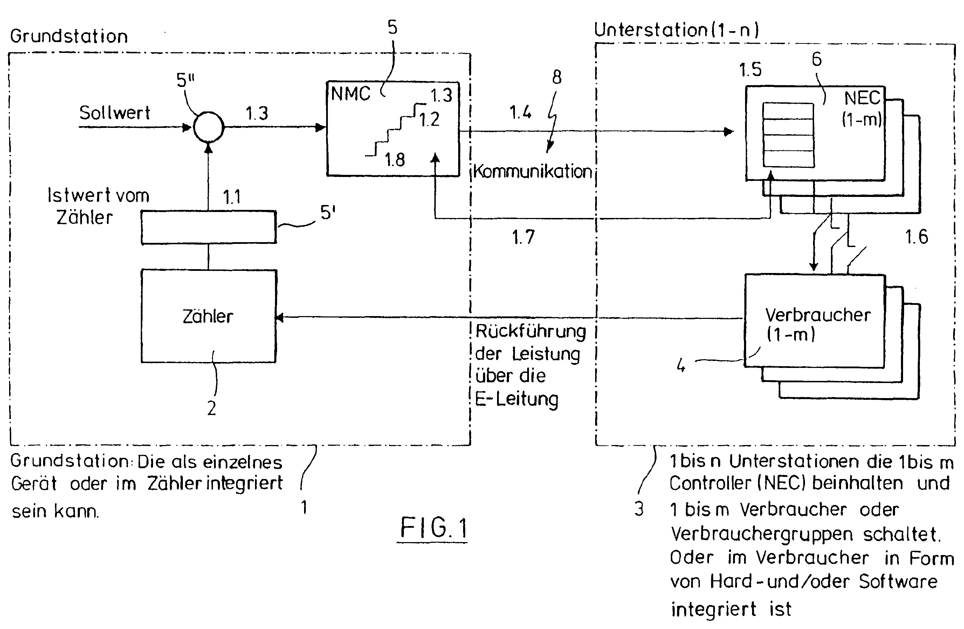

Gemäß Fig. 1 umfaßt das System eine Grundstation 1, die einem Elektrizitätszähler 2 zugeordnet ist, und Unterstationen 3, die jeweils zu einer Steuerung eines Verbrauchers 4 gehören. Die Grundstation 1 und die Unterstationen 3 werden im Beispiel von Software-Modulen 5, 6 betrieben, jedoch ist auch eine Hardware-Ausführung möglich. Das Software-Modul 5 der Grundstation heißt Nodus Main Controller (NMC) und die Software-Module 6 der Unterstationen 3 heißen Nodus Energy Controller (NEC). Der NMC 5 kann in den Elektrizitätszähler 2 integriert sein. Die NECs 6 können auch in die Verbraucher 3 integriert sein, insbesondere wenn diese eine integrierte Steuer- oder Regelsoftware haben. Die Integration ist auch bei Hardware-Ausführungen der Grundstation 1 bzw. Unterstationen 3 möglich.

Sämtliche Verbraucher 4 sind auf den Elektrizitätszähler 2 geschaltet, der die von den Verbrauchern aufgenommene elektrische Arbeit und deren Gesamtleistungsaufnahme ermittelt. Aus den Meßwerten des Elektrizitätszählers wird im Modul 5', der zum Modul 5 gehören kann, eine Trendleistung berechnet. Diese wird von einem zur Grundstation 1 gehörenden Vergleicher 5", der ebenfalls zum Modul 5 gehören kann, mit einer vorgegebenen Leistungsspitze verglichen.

Grundstation 1 und Unterstationen 3 kommunizieren über ein Übertragungsmedium 8, wobei es sich insbesondere um das 230 Volt-Hausnetz, Telefon, Zweidrahtleitung, Glasfaser oder Funk handeln kann.

Dabei kann Gebrauch von LON (Local Operating Network) gemacht werden, d.h. einem Kommunikationssystem, das von der amerikanischen Firma Echelon insbesondere für die Industrie- und Gebäudeautomatisierung entwickelt wurde. Dieses System hebt sich von der Vielzahl anderer auf dem Markt erhältlicher Bussysteme durch das Prinzip der dezentralen Intelligenz ab. Die Knoten, d.h. die Teilnehmer des Netzwerks (hier: Grundstation 1 und Unterstationen 3), sind befähigt, aufwendige Berechnungen selbst durchzuführen und Entscheidungen zu treffen. Über diese Aktionen kommunizieren sie direkt miteinander. So verhält sich das LON in vielfacher. Hinsicht flexibler und reagiert schneller als zentral konzipierte Netzwerke.

Die gesamte Steuerung eines LON-Knotens ist in einem IC untergebracht, dem Neuron-Chip. Dieser wird über eine Applikationsschnittstelle an einen Verbraucher 3 oder dessen Steuerung angeschlossen und kommuniziert über eine serielle Busschnittstelle mit dem Übertragungsmedium 8, wobei ein dem jeweiligen Übertragungsmedium 8 entsprechender Transceiver die physikalische Signalformatierung übernimmt.

Die Programmierung eines LON-Knotens erfolgt in der Programmiersprache NEURON-C, einem auf ANSI-C aufbauenden Dialekt, der um einige spezifische Befehle erweitert wurde. Das wichtigste zusätzliche Sprachelement sind die Netzwerkvariablen. Sie werden definiert und benutzt wie jede andere C-Variable. Bei der Typangabe sind lediglich die Worte "Network Input" oder "Network Output" veranzustellen. Die Netzwerkvariablen eröffnen dem NEURON-C-Programm die Kommunikation mit der LON-Welt. Verändert sich der Inhalt einer Netzwerkvariablen, so sendet der Knoten automatisch ein Telegramm mit den neuen Daten aus. Der aktuelle Zustand der Netzwerkvariablen eines Netzwerks ist somit immer für alle Busteilnehmer verfügbar.

Damit unterschiedliche LON-Komponenten verschiedener Hersteller problemlos zusammenarbeiten, hat Echelon eine Reihe von Standard-NetzwerkVariablen-Typen (SNVT) entwickelt.

Das Netzwerk wird zunächst installiert. Danach werden die Grundstation 1 und die Unterstationen 3 parametriert, z.B. durch Vergabe von Prioritäten und Schaltleistungen an Unterstationen 3.

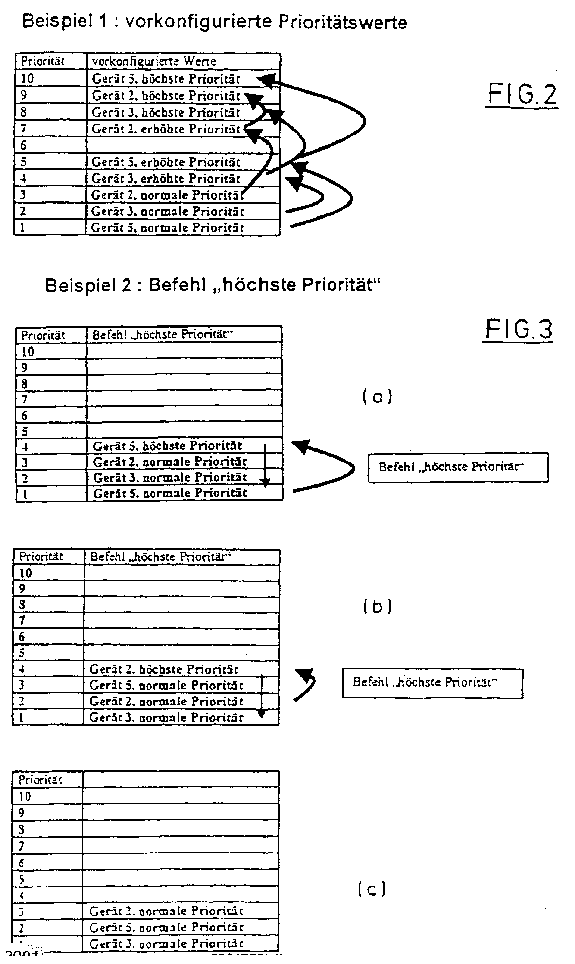

Die Tabelle in Fig. 2 veranschaulicht ein Verfahren, das mit vorkonfigurierten Prioritäten verschiedener Verbraucher (dort Geräte 2, 3, 5 genannt) arbeitet. Jeder Pfeil symbolisiert den Übergang eines Gerätes von einer vorkonfigurierten Priorität zu einer anderen vorkonfigurierten Priorität.

Sind die Geräte 2, 3 und 5 in normaler Priorität, so haben sie in der Prioritätenliste die Reihenfolge
Gerät 5
Gerät 3
Gerät 2
d.h., das Gerät 5 wird erstes abgeschaltet, dann das Gerät 3 und dann das Gerät 2.

Wird nun das Gerät 5 in erhöhte Priorität gebracht, so ist die neue Reihenfolge:
Gerät 3
Gerät 2
Gerät 5
d.h., das Gerät 5 wird als letztes abgeschaltet.

In dem Beispiel verwaltet die Grundstation nur 8 verschiedene Prioritäten. Werden die Geräte in eine Priorität größer als 8 geschaltet, so sind sie freigeschaltet und stehen für das Abschalten oder Einschalten nicht zur Verfügung. Auch ist es möglich, mehrere Geräte auf die gleiche Priorität zu legen.

Ferner ist zweckmäßigerweise eine konfigurierbare Zeit vorgegeben, nach der sich das jeweilige Gerät selbständig auf eine niedrigere Priorität zurückschaltet. Anderenfalls haben die Geräte die Tendenz, im Laufe der Zeit eine immer höhere Priorität einzunehmen.

Die Tabellen von Fig. 3 betreffen nun ein Beispiel für das Arbeiten mit relativen Prioritätsangaben. Auch hier symbolisiert ein gebogener Pfeil jeweils den Übergang eines Gerätes von einer Priorität in eine andere Priorität.

Gemäß Tabelle 3a sind die Geräte 2, 3 und 5 in normaler Position und haben die Reihenfolge
Gerät 5
Gerät 3
Gerät 2
d.h. das Gerät 5 wird als erstes abgeschaltet. Wird die Information "höchste Priorität" vom Gerät 5 gesendet, so wird es in der Tabelle oben eingetragen, d.h. das Gerät 5 wird als letztes abgeschaltet. Danach rutschen die Geräte in der Tabelle jeweils um eine Priorität nach unten, wie durch den vertikalen Pfeil in der Fig. 3a symbolisiert.

Gemäß Tabellen in Fig. 3b wird vom Gerät 2 die Information "höchste Priorität" gesendet, so daß es in der Tabelle oben eingetragen wird. Wie durch den vertikalen Pfeil symbolisiert ist, rutschen danach sämtliche Geräte in der Liste um eine Priorität nach unten. Das Gerät 2 wird nun als letztes abgeschaltet. Die Reihenfolge der Abschaltung ist nämlich nun
Gerät 3
Gerät 5
Gerät 2.

Dieser Zustand der Tabelle ist in der Fig. 3c gezeigt.

Auch in diesem Beispiel verwaltet die Grundstation nur acht Prioritäten. Durch Kombination mit vorkonfigurierten Prioritätswerten ist es auch hier möglich, Geräte in einer Priorität über 8 zu legen. Werden Geräte in eine Priorität über 8 geschaltet, so sind sie freigeschaltet und stehen für die Optimierung des Energieverbrauches nicht zur Verfügung.

Es ist allerdings bei diesem Verfahren nicht möglich, mehrere Geräte auf die gleiche Priorität zu legen. Bei diesem Verfahren muß die Grundstation der Unterstation mitteilen, auf welche Prioritätsstufe das Gerät reagieren soll. Alle wichtigen Geräte müssen die Möglichkeit haben, ihre Priorität zu ändern. Sonst würde das System dazu tendieren, den Geräten eine niedrigere Priorität und würden diese Geräte unter Umständen nicht richtig berücksichtigt.

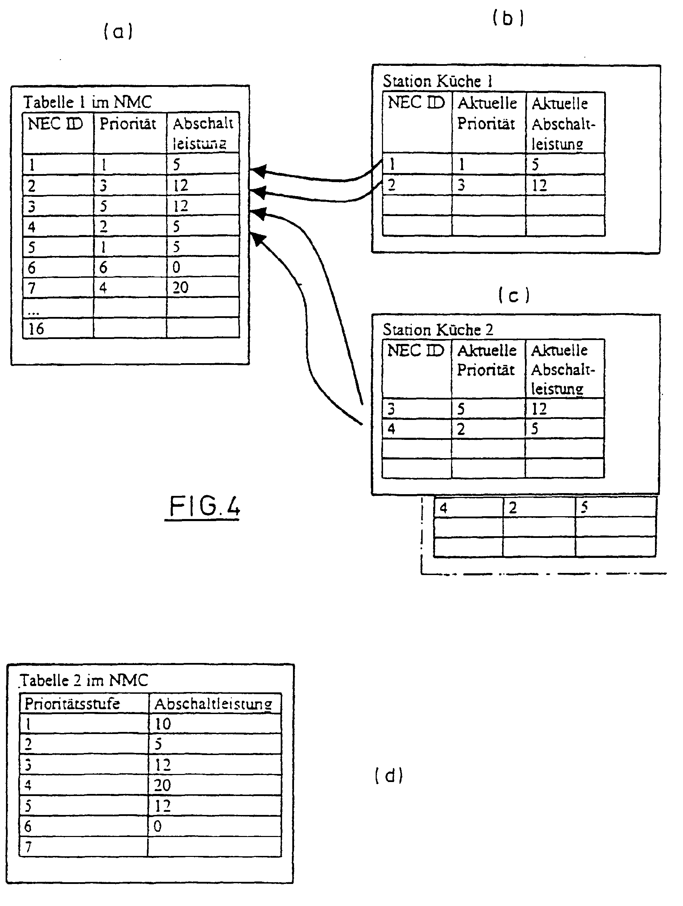

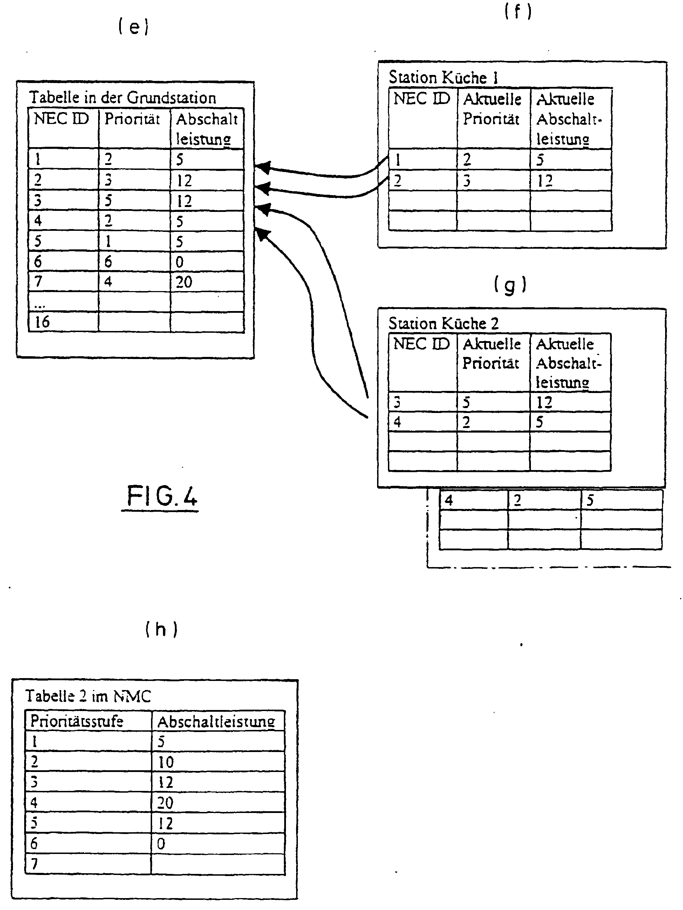

Die Fig. 4 veranschaulicht nun das Arbeiten mit vorkonfigurierten, teilweise übereinstimmenden Prioritäten. Dabei befinden sich in der Grundstation, genauer gesagt im NMC, zwei Tabellen. In der ersten Tabelle (Fig. 4a) wird zur Identifikation für jede Unterstation, genauer gesagt NEC, die aktuelle Priorität und die aktuelle Schaltleistung gespeichert. Wie aus den Tabellen Fig. 4b und 4c ersichtlich ist, können die betreffenden Unterstationen Verbrauchern in verschiedenen Arbeitsbereichen angehören, beispielsweise einer Küche 1 und einer Küche 2.

In der zweiten Tabelle der Grundstation werden gemäß Fig. 4d für jede Prioritätsstufe die gesamten Schaltleistungen gespeichert. Anhand dieser Tabelle ermittelt die Grundstation unter Berücksichtigung der momentanen Trendleistung der elektrischen Verbraucher und einer vorgegebenen Spitzenlast, welche Prioritätsstufen die abzuschaltenden oder einzuschaltenden Verbraucher haben. Dabei können positive Prioritätsstufen für die Abschaltung einzelner Geräte und negative Prioritätsstufen für die Einschaltung einzelner Geräte im Rahmen einer Zuschaltung benutzt werden, letzteres beispielsweise um Energie in Kühlzellen zu sparen.

Aufgrund der ereignisgesteuerten Kommunikation zwischen Grundstation und Unterstationen kann sich sowohl die Priorität der Geräte als auch die gesamte Schaltleistung bei jeder Prioritätsstufe ändern. Die Tabellen in Fig. 4e, f, g und h veranschaulichen dies für eine Änderung der Priorität der Unterstationen mit der Identifikation 1. Durch die Änderung der Priorität dieser Unterstation von 1 auf 2 reduziert sich die gesamte Schaltleistung der Prioritätsstufe 1 von 10 auf 5 und steigert sich die gesamte Schaltleistung der Prioritätsstufe 2 von 5 auf 10.

Soll ein Gerät nicht abgeschaltet werden (z.B. weil es unbedingt benötigt wird), wird die Prioritätsstufe so weit erhöht, daß die Grundstation diese nicht mehr erreicht (z.B. Stufe 9 bei maximal acht Stufen der Grundstation). Die zugehörige Unterstation sendet der Grundstation diese Information. Damit berechnet die Grundstation die zur Verfügung stehende Schaltleistung neu. Umgekehrt sendet die Grundstation den Unterstationen eine aktualisierte Prioritätsstufe, wenn die Trendberechnung des Gesamtverbrauchs ergibt, das Geräte abgeschaltet werden müssen oder abgeschaltete Geräte wieder zugeschaltet werden können.

## Patentansprüche

1. Verfahren zum Regeln der Gesamtleistung energietechnischer Anlagen, insbesondere einer Gruppe von elektrischen Verbrauchern, bei dem
1.1 eine Grundstation die momentane Gesamtleistung der energietechnischen Anlage ermittelt,
1.2 die Grundstation in einer Tabelle für jeden Verbraucher eine aktuelle Priorität und ein erwartetes Schaltverhalten speichert,
1.3 die Grundstation aufgrund des Vergleichs der Gesamtleistung und mindestens eines vorgegebenen Leistungswertes anhand der Tabelle eine Prioritätsstufe ermittelt, die eine Grenze zwischen Verbrauchern definiert, die in den Lastabwurf zu bringen, im Normalbetrieb zu betreiben oder zum Speichern von Energie zu bringen sind,
1.4 die Grundstation über ein Übertragungsmedium die ermittelte Prioritätsstufe überträgt,
1.5 die übertragene Prioritätsstufe von Unterstationen empfangen wird, von denen jede einer Steuerung zugeordnet ist, die mindestens einem Verbraucher zugeordnet ist,
1.6 die Unterstationen aufgrund eines Vergleichs der empfangenen Prioritätsstufe mit ihrer aktuellen Priorität die diesen zugeordneten Verbraucher in den Lastabwurf bringt, dazu bringt im Normalbetrieb zu arbeiten oder Energie zu speichern,
1.7 die Unterstationen ihre jeweilige aktuelle Priorität über ein Übertragungsmedium an die Grundstation übermitteln und
1.8 die Grundstation die Tabelle aufgrund der von den Unterstationen übermittelten Priorität ändert.

2. Verfahren nach Anspruch 1, bei dem die Grundstation aufgrund von Messungen des Verbrauchs in Zeitintervallen einen Trend der Gesamtleistung der elektrischen Verbraucher errechnet und die Grundstation aufgrund eines Vergleiches des Trends der Gesamtleistung und des vorgegebenen Leistungswerts anhand der Tabelle die Prioritätsstufe ermittelt, welche an die Unterstationen zu übertragen ist.

3. Verfahren nach Anspruch 1 oder 2, bei dem mehreren Verbrauchern dieselbe Priorität zugeordnet werden kann, die Grundstation für jede Prioritätsstufe die gesamte Schaltleistung errechnet, in einer weiteren Tabelle Prioritätsstufen und zugeordnete gesamte Schaltleistung speichert und aufgrund des Vergleichs der Gesamtleistung und des vorgegebenen Leistungswerts anhand der weiteren Tabelle die Prioritätsstufe ermittelt, welche an die Unterstationen zu übertragen ist.

4. Verfahren nach einem der Ansprüche 1 bis 3, bei dem sämtliche Verbraucher, deren Absolutwert der aktuellen Priorität größer oder gleich dem Absolutwert der Prioritätsstufe ist, in Normalbetrieb geschaltet werden oder im Normalbetrieb bleiben, sämtliche Verbraucher mit positiver aktueller Priorität, die kleiner ist als eine positive Prioritätsstufe in Lastabwurf gebracht werden oder bleiben und sämtliche Verbraucher mit negativer Priorität, deren Absolutwert kleiner als der Absolutwert einer negativen Prioritätsstufe ist, zum Energiespeichern gebracht werden oder dabei bleiben.

5. Verfahren nach einem der Ansprüche 1 bis 4, bei dem die Unterstationen das erwartete Schaltverhalten der diesen zugeordneten Verbraucher ermitteln und über ein Übertragungsmedium an die Grundstation übermitteln.

6. Verfahren nach Anspruch 5, bei dem die Unterstationen das erwartete Schaltverhalten aufgrund von Betriebsdaten und/oder aufgrund von Bedienervorgaben ermitteln.

7. Verfahren nach Anspruch 5 oder 6, bei dem die Unterstationen als Daten für das erwartete Schaltverhalten Schaltleistungen, Schaltdauern und Schaltzeitpunkte ermitteln und an die Grundstation übermitteln.

8. Verfahren nach einem der Ansprüche 5 bis 7, bei dem die Unterstationen einem Verbraucher, der nicht eingeschaltet ist oder gerade nicht abgeschaltet werden darf oder einem Verbraucher, der abgeschaltet ist oder gerade nicht eingeschaltet werden darf die Schaltleistung Null zuordnen und eine Information über die Schaltleistung über das Übertragungsmedium an die Grundstation übermitteln.

9. Verfahren nach einem der Ansprüche 1 bis 9, bei dem die Unterstationen ihre jeweilige aktuelle Priorität aufgrund von Betriebsdaten der diesen zugeordneten Verbraucher und/oder aufgrund von Bedienervorgaben ermitteln.

10. Verfahren nach einem der Ansprüche 1 bis 9, bei dem die Unterstationen einem Verbraucher, der gerade nicht abgeschaltet oder eingeschaltet werden darf, eine entsprechende Priorität zuordnen und eine Information über diese Priorität an die Grundstation übermitteln.

11. Verfahren nach einem der Ansprüche 1 bis 10, bei dem den Daten der aktuellen Priorität und des erwarteten Schaltverhaltens in der Tabelle eine Identifikation des jeweils zugeordneten Verbrauchers zugeordnet ist und/oder bei dem den von den Unterstationen an die Grundstation übermittelten Daten der aktuellen Priorität und/oder des erwarteten Schaltverhaltens eine Identifikation für den jeweils zugeordneten Verbraucher zugeordnet ist.

12. Verfahren nach einem der Ansprüche 1 bis 11, bei dem die Grundstation als separates Gerät dem Elektrizitätszähler zugeordnet ist.

13. Verfahren nach einem der Ansprüche 1 bis 11, bei dem die Grundstation in den Elektrizitätszähler integriert ist.

14. Verfahren nach einem der Ansprüche 1 bis 13, bei dem als Übertragungsmedium ein 230 Volt-Hausnetz, eine Zweidrahtleitung, Glasfaser, Koaxialkabel und/oder Funk verwendet wird.

15. Verfahren nach einem der Ansprüche 1 bis 14, bei dem mindestens eine Unterstation als separates Gerät dem zugehörigen Verbraucher zugeordnet ist.

16. Verfahren nach einem der Ansprüche 1 bis 15, bei dem zumindest eine Unterstation in den zugehörigen Verbraucher integriert ist.

17. Verfahren nach einem der Ansprüche 1 bis 16, bei dem die Prioritäten, Abschaltleistungen, Ein- und Ausschaltzeiten von einem Bediener in die Grundstation und/oder Unterstationen eingegeben und damit konfiguriert werden.

18. Vorrichtung zum Regeln der Gesamtleistung energietechnischer Anlagen mit einer in einen Elektrizitätszähler integrierten Grundstation zum
Ermitteln der momentanen Gesamtleistung einer energietechnischen Anlage,
Speichern einer aktuellen Priorität und eines erwarteten Schaltverhaltens für jeden Verbraucher in einer Tabelle,
Ermitteln einer Prioritätsstufe aufgrund des Vergleichs der Gesamtleistung und mindestens eines vorgegebenen Leistungswertes anhand der Tabelle, die eine Grenze zwischen Verbrauchern definiert, die in den Lastabwurf zu bringen, im Normalbetrieb zu betreiben oder zum Speichern von Energie zu bringen sind,
Übertragen der ermittelten Prioritätsstufe über ein Übertragungsmedium an Unterstationen von denen jede einer Steuerung zugeordnet ist, die mindestens einem Verbraucher zugeordnet ist, wobei, die Unterstationen aufgrund eines Vergleichs der empfangenen Prioritätsstufe mit ihrer aktuellen Priorität die diesen zugeordneten Verbraucher in den Lastabwurf bringen, dazu bringen im Normalbetrieb zu arbeiten oder Energie zu speichern und ihre jeweilige aktuelle Priorität über ein Übertragungsmedium an die Grundstation übermitteln,
Ändern der Tabelle aufgrund der von den Unterstationen übermittelten Priorität und zum Steuern der Verbraucher aufgrund eines Vergleichs der momentanen Gesamtleistung mit einem vorgegebenen Leistungswert unter Berücksichtigung des erwarteten Schaltverhaltens der Verbraucher.

## Claims

1. Method for adjusting the total power of electric installations, especially of a group of electric consumers, in which
1.1 a base station determines the current total power of the electric installation,
1.2 the base station stores a current priority and an expected switching behavior in a table for each consumer,
1.3 the base station determines, based on the table, a priority level, which defines a limit between consumers, which are to be brought into load rejection, to be operated in normal mode or to store energy, based on a comparison of the total power and at least one specified performance value,
1.4 the base station transfers the determined priority level via a transfer medium,
1.5 the transferred priority level is received by substations, each of which is assigned to a control, which is assigned to at least one consumer,
1.6 the substations bring the consumers assigned to them to load rejection, to work in normal mode or to store energy, based on a comparison of the received priority level with its current priority.
1.7 the substations transfer their respective current priority to the base station via a transfer medium,
1.8 the base station changes the table based on the priority transferred by the substations.

2. Method in accordance with claim 1, in which the base station calculates a trend in the total power of the electric consumers in time intervals based on measurements of the consumption, and the base station determines the priority level to be transferred to the substations based on a comparison of the trend of the total power and the specified performance value using the table.

3. Method in accordance with claim 1 or 2, in which the same priority can be assigned to several consumers, the base station for each priority level calculates the total switching power, saves priority levels and assigned total switching power in another table and determines the priority level to be transferred to the substations based on a comparison of the total power and the specified performance value using the other table.

4. Method in accordance with one of claims 1 through 3, in which all consumers, the absolute value of the current priority of which is greater than or equal to the absolute value of the priority level, are switched to normal mode or remain in normal mode, all consumers with a positive current priority that is smaller than a positive priority level are brought or remain in load rejection and all consumers with a negative priority, the absolute value of which is smaller than the absolute value of a negative priority level, are brought to store energy or remain there.

5. Method in accordance with one of claims 1 through 4, in which the substations determine the expected switching behavior of the consumers assigned to them and transfer it to the base station via a transfer medium.

6. Method in accordance with claim 5, in which the substations determine the expected switching behavior based on operating data and/or based on operator specifications.

7. Method in accordance with claim 5 or 6, in which the substations determine switching capacities, switching durations and switching times as data for the expected switching behavior and transfer it to the base station.

8. Method in accordance with one of claims 5 through 7, in which the substations assign the switching capacity zero to a consumer that is not switched on or may not be switched off just now or to a consumer that is switched off or may not be switched on just now and transfer information on the switching capacity to the base station via the transfer medium.

9. Method in accordance with one of claims 1 through 9, in which the substations determine their respective current priority based on operating data of the consumers assigned to it and/or based on operator specifications.

10. Method in accordance with one of claims 1 through 9, in which the substations assign a corresponding priority to a consumer that must not be switched off or on just now and transfer information about this priority to the base station.

11. Method in accordance with one of claims 1 through 10, in which an identification of the respective assigned consumer is assigned to the data of the current priority and the expected switching behavior in the table and/or in which an identification for the respective assigned consumer is assigned to the data transferred by the substations to the base station.

12. Method in accordance with one of claims 1 through 11, in which the base station is assigned to the electricity meter as a separate device.

13. Method in accordance with one of claims 1 through 11, in which the base station is integrated into the electricity meter.

14. Method in accordance with one of claims 1 through 13, in which a 230-volt in-house network, a two-wire line, glass fibers, coaxial cables and/or radio communication is used as the transfer medium.

15. Method in accordance with one of claims 1 through 14, in which at least one substation is assigned to the associated consumer as a separate device.

16. Method in accordance with one of claims 1 through 15, in which at least one substation is integrated into the associated consumer.

17. Method in accordance with one of claims 1 through 16, in which the priorities, switch-off capacities, switch-on and switch-off times are entered in the base station and/or substations by an operator and are thereby configured.

18. Device for adjusting the total power of electric installations with a base station integrated in an electricity meter for
determining the current total power of an electric installation,
storing a current priority and an expected switching behavior for each consumer in a table,
determining a priority level based on a comparison of the total power and at least one specified performance value based on the table, which defines a limit between consumers, which are to be brought to load rejection, to be operated in normal mode or to store energy,
transferring the determined priority level via a transfer medium to substations, each of which is assigned to a control, which is assigned to at least one consumer, whereby the substations bring the consumers assigned to it in the load rejection, in order to work in normal mode or to store energy and transfer its respective current priority to the base station via the substations,
changing the table based on the priority transferred by the substations and for controlling the consumer based on a comparison of the current total power with a specified performance value while taking the expected switching behavior of the consumer into consideration.

## Revendications

1. Procédé de réglage de la puissance totale d'installations électriques, particulièrement d'un groupe de consommateurs d'énergie, dans lequel
1.1 une station de base détermine la puissance totale momentanée de l'installation électrique,
1.2 la station de base enregistre dans un tableau, pour chaque consommateur, une priorité actuelle et un comportement de commutation attendu,
1.3 sur la base de la comparaison de la puissance totale et d'au moins une valeur de puissance prédéfinie, la station de base détermine, à l'aide du tableau, un niveau de priorité qui définit une limite entre des consommateurs qui doivent être placés dans l'état de délestage brusque, qui doivent être exploités dans le mode normal ou qui doivent être amenés à stocker de l'énergie,
1.4 la station de base, via un milieu de transmission, transmet le niveau de priorité déterminé,
1.5 le niveau de priorité transmis est reçu par des sous-stations dont chacune est affectée à une commande qui est affectée à au moins un consommateur,
1.6 les sous-stations, sur la base d'une comparaison du niveau de priorité reçu et de leur niveau de priorité, amènent les consommateurs affectés à celles-ci dans l'état de délestage brusque, les amènent à travailler dans le mode normal ou bien à stocker de l'énergie,
1.7 les sous-stations transmettent à la station de base, via un milieu de transmission, leur priorité actuelle respective et
1.8 la station de base modifie le tableau sur la base de la priorité transmise par les sous-stations.

2. Procédé selon la revendication 1, dans lequel la station de base, sur la base de mesures de la consommation dans des intervalles de temps, calcule une tendance de la puissance totale des consommateurs d'énergie, et dans lequel la sous-station, sur la base d'une comparaison de la tendance de la puissance totale et de la valeur de puissance prédéfinie, détermine à l'aide du tableau le niveau de priorité qui doit être transmis aux sous-stations.

3. Procédé selon la revendication 1 ou 2, dans lequel la même priorité peut être affectée à plusieurs consommateurs, la station de base calcule pour chaque niveau de priorité la puissance de commutation totale, enregistre dans un autre tableau des niveaux de priorité et la puissance de commutation totale affectée et, sur la base de la comparaison de la puissance totale et de la valeur de puissance prédéfinie, détermine à l'aide de l'autre tableau le niveau de priorité qui doit être transmis aux sous-stations.

4. Procédé selon une des revendications 1 à 3, dans lequel tous les consommateurs dont la valeur absolue de la priorité actuelle est supérieure ou égale à la valeur absolue du niveau de priorité sont commutés dans le mode normal ou demeurent dans le mode normal, tous les consommateurs avec une priorité actuelle positive qui est inférieure à un niveau de priorité positif sont amenés dans l'état de délestage brusque ou y demeurent, et tous les consommateurs avec une priorité négative dont la valeur absolue est inférieure à la valeur absolue d'un niveau de priorité négatif sont amenés à l'état de stockage d'énergie ou y demeurent.

5. Procédé selon une des revendications 1 à 4, dans lequel les sous-stations déterminent le comportement de commutation attendu des consommateurs qui leur sont affectés et le transmettent à la station de base via un milieu de transmission.

6. Procédé selon la revendication 5, dans lequel les sous-stations déterminent le comportement de commutation attendu sur la base de données de fonctionnement et/ou sur la base de paramètres d'opérateur.

7. Procédé selon la revendication 5 ou 6, dans lequel les sous-stations déterminent, en tant que données pour le comportement de commutation attendu, les puissances de commutation, les durées de commutation et les moments de commutation et transmettent cela à la station de base.

8. Procédé selon une des revendications 5 à 7, dans lequel les sous-stations affectent la puissance de commutation zéro à un consommateur qui n'est pas en circuit ou qui ne doit justement pas être mis hors circuit, ou à un consommateur qui est hors circuit ou qui ne doit justement pas être mis en circuit, et transmettent à la station de base, via le milieu de transmission, une information sur la puissance de commutation.

9. Procédé selon une des revendications 1 à 9, dans lequel les sous-stations déterminent leur priorité actuelle respective sur la base de données de fonctionnement des consommateurs affectés à celles-ci et/ou sur la base de paramètres d'opérateur.

10. Procédé selon une des revendications 1 à 9, dans lequel les sous-stations affectent une priorité correspondante à un consommateur qui ne doit justement pas être mis hors circuit ou mis en circuit, et transmettent à la station de base une information sur cette priorité.

11. Procédé selon une des revendications 1 à 10, dans lequel une identification du consommateur respectivement affecté est affectée dans le tableau aux données de la priorité actuelle et du comportement de commutation attendu et/ou une identification est affectée, pour le consommateur respectivement affecté, aux données de la priorité actuelle et/ou du comportement de commutation attendu transmises à la station de base par les sous-stations.

12. Procédé selon une des revendications 1 à 11, dans lequel la station de base, en tant qu'appareil séparé, est affectée au compteur d'électricité.

13. Procédé selon une des revendications 1 à 11, dans lequel la station de base est intégrée dans le compteur d'électricité.

14. Procédé selon une des revendications 1 à 13, dans lequel, en tant que milieu de transmission, on utilise un réseau domestique de 230 volts, une ligne à deux fils, une fibre de verre, un câble coaxial et/ou la radio.

15. Procédé selon une des revendications 1 à 14, dans lequel au moins une sous-station en tant qu'appareil séparé est affectée au consommateur correspondant.

16. Procédé selon une des revendications 1 à 15, dans lequel au moins une sous-station est intégrée dans le consommateur correspondant.

17. Procédé selon une des revendications 1 à 16, dans lequel les priorités, les puissances de coupure, les heures de mise en et hors circuit sont entrées dans la station de base et/ou les sous-stations par un opérateur et sont ainsi configurées.

18. Dispositif de réglage de la puissance totale d'installations électriques avec une station de base intégrée dans un compteur d'électricité pour
la détermination de la puissance totale momentanée d'une installation électrique, pour le stockage dans un tableau d'une priorité actuelle et d'un comportement de commutation attendu pour chaque consommateur,
pour la détermination d'un niveau de priorité sur la base de la comparaison de la puissance totale et d'au moins une valeur de puissance prédéfinie sur la base du tableau, qui définit une limite entre des consommateurs qui doivent être amenés dans l'état de délestage brusque, être amenés à fonctionner dans le mode normal et ou être amenés dans l'état de stockage d'énergie,
pour la transmission du niveau de priorité déterminé, via un milieu de transmission, à des sous-stations dont chacune est affectée à une commande qui est affectée au moins à un consommateur, les sous-stations, sur la base d'une comparaison du niveau de priorité reçu et de leur priorité actuelle, amenant les consommateurs qui leur sont affectés dans l'état de délestage brusque, les amenant à travailler dans le mode normal ou à stocker de l'énergie et transmettant leur priorité actuelle respective à la station de base via un milieu de transmission,
la modification du tableau sur la base de la priorité transmise par les sous-stations et pour la commande des consommateurs sur la base d'une comparaison de la puissance totale momentanée et d'une valeur de puissance prédéfinie avec prise en compte du comportement de commutation attendu des consommateurs.
